# EUROPEAN PATENT APPLICATION

(11) **EP 4 510 503 A1**
(43) Date of publication of application: **19.02.2025**
(21) Application number: 23802877.3
(22) Date of filing: 09.05.2023
(51) Int. Cl.: H04L 9/40

(54) **COMMUNICATION METHOD AND APPARATUS, AND RELATED DEVICE AND STORAGE MEDIUM**

(30) Priority: 10.05.2022 CN 202210509395
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: PANG, Yakun, Beijing 100032 (CN)
(74) Representative: J A Kemp LLP
(86) International application number: PCT/CN2023/092905
(87) International publication number: WO 2023/217107

(57) **Abstract**

Disclosed in the present application are a communication method and apparatus, and a first node, a platform, a second node and a storage medium. The method comprises: a first node sending first information to a first platform, wherein the first information is used for joint calculation of the first node and at least one second node, or is used for calculation of the at least one second node; and the first information includes related information required by the calculation.

## Description

### CROSS-REFERENCE TO RELATED APPLICATION

This application claims priority to Chinese patent application No. 202210509395.2 filed on May 10, 2022, the disclosure of which is hereby incorporated by reference in its entirety.

### TECHNICAL FIELD

The disclosure relates to the field of data applications, and in particular to a method and apparatus for communication, a related device, and a storage medium.

### BACKGROUND

In the era of big data, data presents unprecedented explosive growth. Massive data scale, rapid data transfer, dynamic data system, and diverse data types give data unprecedented values. In this context, implementation of data circulation and sharing is of extraordinary significance to various fields and industries.

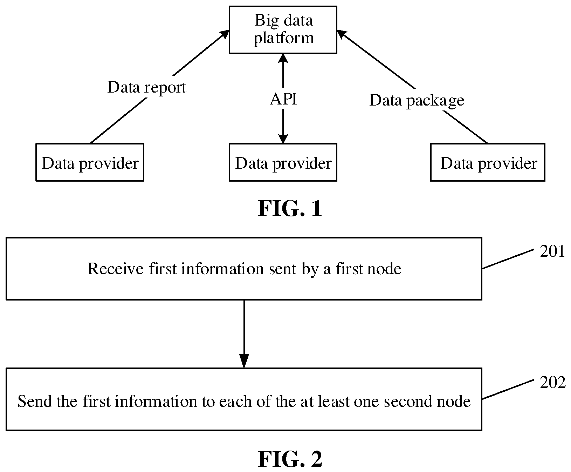

In the related art, a big data trading center (which may also be referred to as a big data platform), used as data storage and calculation infrastructure, may implement data circulation and sharing. As shown in FIG. 1, a data provider may access to the big data trading center by providing (i.e., sending) data packages, providing data reports, or other manners through data Application Programming Interface (API) products.

However, data circulation and sharing implemented through the big data trading center cannot meet requirements of a data demander.

### SUMMARY

In order to solve related technical problems, embodiments of the disclosure provide a method and apparatus for communication, a related device, and a storage medium.

Technical solutions of the embodiments of the disclosure are implemented as follows.

An embodiment of the disclosure provides a method for communication, and the method is applied to a first node. The method includes the following operations.

First information is sent to a first platform, here the first information is used for joint calculation by the first node and at least one second node, or used for calculation by the at least one second node, and the first information includes relevant information required by the calculation.

In the above solution, in case that the first information is used for joint calculation by the first node and at least one second node, and the first information includes algorithm information required by the calculation, the method may further include the following operations.

A first request is sent to the first platform based on the algorithm information required by the calculation. Here the first request is configured to request acquisition of an algorithm package required by the calculation.

The algorithm package sent by the first platform based on the first request is received.

In the above solution, the method may further include the following operations.

The joint calculation is performed with the at least one second node by using the first information and the received algorithm package, to obtain a first calculation result.

In the above solution, in case that the first information is used for calculation by the at least one second node, the method may further include the following operations.

A second calculation result sent by the first platform is received, here the second calculation result is determined by the first platform using the first information and at least one third calculation result, and each of the at least one third calculation result is calculated by a respective one of the at least one second node using the first information.

In the above solution, before sending the first information to the first platform, the method may further include the following operations.

Second information is acquired. Here the second information includes names of fields included in data entered into the first node.

The names of the fields included in the data entered into the first node are corrected by using a first database, to obtain corrected second information. Here the first database includes multiple preset field names.

The data entered into the first node is stored based on the corrected second information.

In the above solution, the first information may include at least one of:
algorithm information required by the calculation;
an identifier (ID) of the at least one second node; or
ID of the first node.

In the above solution, before sending the first information to the first platform, the method may further include the following operations.

Third information is acquired. Here the third information includes names of fields included in data stored in the first node.

Fourth information of each of the at least one second node is acquired. Here the fourth information includes names of fields included in data stored in the second node.

With respect to each of the at least one second node, it is determined, based on the third information and the fourth information of the second node, whether the names of the fields included in the data stored in the second node are consistent with the names of the fields included in the data stored in the first node.

The third information is sent to the second node in case that the names of the fields included in the data stored in the second node are inconsistent with the names of the fields included in the data stored in the first node, to enable the second node to update the names of the fields included in the stored data by using the third information.

In the above solution, the operation of acquiring fourth information of each of the at least one second node may include the following operations.

A second request is sent to each of the at least one second node. Here the second request is configured to request acquisition of the fourth information of the second node.

The fourth information sent by each of the at least one second node based on the second request is received.

In the above solution, in case that the first information is used for joint calculation by the first node and at least one second node, the method may further include the following operations.

The joint calculation is performed with the at least one second node upon receiving fifth information sent by the first platform, to obtain a first calculation result, here the fifth information indicates that availability of data stored in the at least one second node is verified.

In the above solution, the method may further include the following operations.

The first platform is accessed.

An embodiment of the disclosure further provides a method for communication, and the method is applied to a first platform. The method includes the following operations.

First information sent by a first node is received, here the first information is used for joint calculation by the first node and at least one second node, or used for calculation by the at least one second node, and the first information includes relevant information required by the calculation.

The first information is sent to each of the at least one second node.

In the above solution, in case that the first information is used for joint calculation by the first node and at least one second node, and the first information includes algorithm information required by the calculation, the method may further include the following operations.

A first request sent by the first node based on the algorithm information required by the calculation is received. Here the first request is configured to request acquisition of an algorithm package required by the calculation.

The algorithm package required by the calculation is sent to the first node based on the first request.

In the above solution, in case that the first information includes algorithm information required by the calculation, the method may further include the following operations.

A third request sent by each of the at least one second node based on the algorithm information required by the calculation is received. Here the third request is configured to request acquisition of an algorithm package required by the calculation.

The algorithm package required by the calculation is sent to each of the at least one second node based on the third request.

In the above solution, in case that the first information is used for calculation by the at least one second node, the method may further include the following operations.

A third calculation result sent by each of the at least one second node is received, to obtain at least one third calculation result, here each of the at least one third calculation result is calculated by a respective one of the at least one second node using the first information.

A second calculation result is determined by using the first information and the at least one third calculation result.

The second calculation result is sent to the first node.

In the above solution, the first information may include at least one of:
algorithm information required by the calculation;
ID of the at least one second node; or
ID of the first node.

In the above solution, the method may further include the following operations.

Fourth information of each of the at least one second node is acquired, here the fourth information includes names of fields included in data stored in the second node.

Availability of the data stored in each of the at least one second node is verified by using the fourth information and a preset first strategy.

The first information is sent to each of the at least one second node, after the availability of the data is verified.

In the above solution, the method may further include the following operations.

Fifth information is sent to the first node, here the fifth information indicates that the availability of the data stored in the at least one second node is verified.

In the above solution, the method may further include the following operations.

The first node and the second node are accessed.

An embodiment of the disclosure further provides a method for communication, and the method is applied to a second node. The method includes the following operations.

First information sent by a first platform is received, here the first information is used for joint calculation by a first node and at least one second node, or used for calculation by the at least one second node, and the first information includes relevant information required by the calculation.

In the above solution, in case that the first information includes algorithm information required by the calculation, the method may further include the following operations.

A third request is sent to the first platform based on the algorithm information required by the calculation, here the third request is configured to request acquisition of an algorithm package required by the calculation.

The algorithm package sent by the first platform based on the third request is received.

In the above solution, in case that the first information is used for joint calculation by the first node and at least one second node, the method may further include the following operations.

The joint calculation is performed with the first node by using the first information and the received algorithm package, to enable the first node to obtain a first calculation result.

In the above solution, in case that the first information is used for calculation by the at least one second node, the method may further include the following operations.

Calculation is performed by using the first information and the received algorithm package, to obtain a third calculation result.

In the above solution, the method may further include the following operations.

The third calculation result is sent to the first platform, to enable the first platform to send a second calculation result to the first node, here the second calculation result is determined by the first platform using the first information and at least one third calculation result, and each of the at least one third calculation result is calculated by a respective one of the at least one second node using the first information.

In the above solution, before receiving the first information sent by the first platform, the method may further include the following operations.

Sixth information is acquired. Here the sixth information includes names of fields included in data entered into the second node.

The names of the fields included in the data entered into the second node are corrected by using a second database, to obtain corrected sixth information. Here the second database includes multiple preset field names.

The data entered into the second node is stored based on the corrected sixth information.

In the above solution, the first information may include at least one of:
algorithm information required by the calculation;
ID of the at least one second node; or
ID of the first node.

In the above solution, before receiving the first information sent by the first platform, the method may further include the following operations.

Fourth information is sent to the first node. Here the fourth information includes names of fields included in data stored in the second node.

Third information sent by the first node is received, here the third information includes names of fields included in data stored in the first node, and the third information is sent by the first node in case that the names of the fields included in the data stored in the second node are inconsistent with the names of the fields included in the data stored in the first node.

The names of the fields included in the stored data are updated by using the third information.

In the above solution, the operation of sending the fourth information to the first node may include the following operations.

A second request sent by the first node is received. Here the second request is configured to request acquisition of the fourth information of the second node.

The fourth information is sent to the first node based on the second request.

In the above solution, before receiving the first information sent by the first platform, the method may further include the following operations.

Fourth information is sent to the first platform, to enable the first platform to verify availability of the data stored in the second node by using the fourth information and a preset first strategy, here the first information is sent by the first platform after the availability of the data stored in the second node is verified.

In the above solution, the method may further include the following operations.

The first node is authenticated by using a preset second strategy.

In case that authentication passes, the joint calculation is performed with the first node by using the first information, to enable the first node to obtain a first calculation result, or the calculation is performed by using the first information, to obtain a third calculation result.

In the above solution, the method may further include the following operations.

The first platform is accessed.

An embodiment of the disclosure further provides an apparatus for communication, the apparatus is arranged in a first node, and includes a first sending unit.

The first sending unit is configured to send first information to a first platform, here the first information is used for joint calculation by the first node and at least one second node, or used for calculation by the at least one second node, and the first information includes relevant information required by the calculation.

An embodiment of the disclosure further provides an apparatus for communication, the apparatus is arranged in a first platform, and includes a first receiving unit and a second sending unit.

The first receiving unit is configured to receive first information sent by a first node, here the first information is used for joint calculation by the first node and at least one second node, or used for calculation by the at least one second node, and the first information includes relevant information required by the calculation.

The second sending unit is configured to send the first information to each of the at least one second node.

An embodiment of the disclosure further provides an apparatus for communication, the apparatus is arranged in a second node, and includes a second receiving unit.

The second receiving unit is configured to receive first information sent by a first platform, here the first information is used for joint calculation by a first node and at least one second node, or used for calculation by the at least one second node, and the first information includes relevant information required by the calculation.

An embodiment of the disclosure further provides a first node, and the first node includes a first communication interface and a first processor.

The first communication interface is configured to send first information to a first platform, here the first information is used for joint calculation by the first node and at least one second node, or used for calculation by the at least one second node, and the first information includes relevant information required by the calculation.

An embodiment of the disclosure further provides a platform, and the platform includes a second communication interface and a second processor.

The second communication interface is configured to:
receive first information sent by a first node, here the first information is used for joint calculation by the first node and at least one second node, or used for calculation by the at least one second node, and the first information includes relevant information required by the calculation; and
send the first information to each of the at least one second node.

An embodiment of the disclosure further provides a second node, and the second node includes a third communication interface and a third processor.

The third communication interface is configured to receive first information sent by a first platform, here the first information is used for joint calculation by a first node and at least one second node, or used for calculation by the at least one second node, and the first information includes relevant information required by the calculation.

An embodiment of the disclosure further provides a first node, the first node includes a first processor, and a first memory configured to store a computer program executable on the processor.

The first processor is configured to perform operations of any one of the above methods on the first node side when the first processor executes the computer program.

An embodiment of the disclosure further provides a platform, the platform includes a second processor, and a second memory configured to store a computer program executable on the processor

The second processor is configured to perform operations of any one of the above methods on the first platform side when the second processor executes the computer program.

An embodiment of the disclosure further provides a second node. The second node includes a third processor, and a third memory configured to store a computer program executable on the processor.

The third processor is configured to perform operations of any one of the above methods on the second node side when the third processor executes the computer program.

An embodiment of the disclosure further provides a storage medium, and a computer program is stored on the storage medium. When the computer program is executed by a processor, operations of any one of the above methods on the first node side are implemented, or operations of any one of the above methods on the first platform side are implemented, or operations of any one of the above methods on the second node side are implemented.

In the method and apparatus for communication, the related device, and the storage medium provided in the embodiments of the disclosure, the first node sends first information to the first platform, here the first information is used for joint calculation by the first node and at least one second node, or used for calculation by the at least one second node, and the first information includes relevant information required by the calculation; the first platform receives the first information sent by the first node, and sends the first information to each of the at least one second node; the second node receives the first information sent by the first platform. According to the solutions provided in the embodiments of the disclosure, the data demander (i.e., the first node) sends calculation requirements (i.e., the first information) to the first platform, so that the first platform may be matched with the data provider (i.e., the second node) according to the calculation requirements, in other words, the first platform may send the calculation requirements to the data provider which is matched with the calculation requirements, so that the data provider may perform calculation according to requirements of the data demander, thereby enabling the data demander to obtain a calculation result matched with its own requirements.

### BRIEF DESCRIPTION OF THE DRAWINGS

FIG. 1 is a schematic diagram of a scenario where a data provider accesses to a big data trading center in the related art.
FIG. 2 is a schematic flowchart of a method for communication according to an embodiment of the disclosure.
FIG. 3 is a schematic diagram of a method for data circulation according to an application embodiment of the disclosure.
FIG. 4 is a schematic diagram of another method for data circulation according to an application embodiment of the disclosure.
FIG. 5 is a schematic structural diagram of a node according to an application embodiment of the disclosure.
FIG. 6 is a schematic diagram of external connections of a node according to an application embodiment of the disclosure.
FIG. 7 is a schematic diagram of a third method for data circulation according to an application embodiment of the disclosure.
FIG. 8 is a schematic diagram of a data directory entry process according to an application embodiment of the disclosure.
FIG. 9 is a schematic diagram of a data directory alignment process according to an application embodiment of the disclosure.
FIG. 10 is a schematic structural diagram of an apparatus for communication according to an embodiment of the disclosure.
FIG. 11 is a schematic structural diagram of another apparatus for communication according to an embodiment of the disclosure.
FIG. 12 is a schematic structural diagram of a third apparatus for communication according to an embodiment of the disclosure.
FIG. 13 is a schematic structural diagram of a first node according to an embodiment of the disclosure.
FIG. 14 is a schematic structural diagram of a platform according to an embodiment of the disclosure.
FIG. 15 is a schematic structural diagram of a second node according to an embodiment of the disclosure.
FIG. 16 is a schematic structural diagram of a system for communication according to an embodiment of the disclosure.

### DETAILED DESCRIPTION

The disclosure will be further described in detail below with reference to the drawings and embodiments.

In the related art, data circulation and sharing implemented through a big data trading center cannot meet requirements of a data demander. Specifically, there are some deficiencies in aspects of meeting user's privacy requirements, deal-making transactions matched with calculation requirements of the data demander, ensuring legality and/or compliance of data packages, etc. For example, data Application Programming Interface (API) products cannot meet user privacy requirements of the data demander, and data package services cannot ensure that user privacy cannot be leaked. For another example, the big data trading center cannot select a data provider according to the calculation requirements of the data demander, and contribute to joint calculation by the data demander and the data provider.

Based on this, in various embodiments of the disclosure, the data demander (i.e., a first node) sends calculation requirements (i.e., first information) to a first platform, so that the first platform may be matched with the data provider (i.e., a second node) according to the calculation requirements, in other words, the first platform may send the calculation requirements to the data provider which is matched with the calculation requirements, so that the data provider may perform calculation according to requirements of the data demander, thereby enabling the data demander to obtain a calculation result matched with its own requirements.

Furthermore, in various embodiments of the disclosure, according to the calculation requirements of the data demander, it may achieve that data of the data provider accesses to the first platform, in a scenario where user privacy requirements of the data demander are protected and the data of the data provider does not leave (that is, the data does not leave out of the data provider's domain).

Thirdly, in various embodiments of the disclosure, the first platform may verify availability of the data of the data provider, thereby ensuring that data packages are legal and/or compliant, and further ensuring data security.

An embodiment of the disclosure provides a method for communication, and the method is applied to a first node. The method includes the following operations.

First information is sent to a first platform, here the first information is used for joint calculation by the first node and at least one second node, or used for calculation by the at least one second node, and the first information includes relevant information required by the calculation.

In an actual application, the first node may also be referred to as a data demander node or a Data Requirement Node (which may be abbreviated as DRN), etc. The embodiment of the disclosure does not limit name of the first node, as long as functions thereof are implemented.

In an actual application, the second node may also be referred to as a data provider node, a data providing node, or a Data Service Node (which may be abbreviated as DSN), etc. The embodiment of the disclosure does not limit name of the second node, as long as functions thereof are implemented.

In an actual application, the first platform may also be referred to as a Data Sharing Service Platform (DSSP), or a Data Sharing Platform (DSP), etc. The embodiment of the disclosure does not limit name of the first platform, as long as functions thereof are implemented.

In an actual application, the joint calculation by the first node and at least one second node may be understood as federated learning, that is, joint model training, which may specifically include horizontal federated learning, vertical federated learning, etc. The disclosure does not limit type of federated learning.

In an actual application, in case that the first information is used for calculation by one second node, the calculation may include model training, target query (such as blacklist query), operation of a specified formula, or the like. In case that the first information is used for calculation by multiple second nodes, the calculation refers to joint calculation by multiple second nodes, that is, federated learning.

In an actual application, it may be understood that in case that the calculation corresponding to the first information needs to use data of the data demander (i.e., data stored in the first node), the first information is used for joint calculation by the first node and at least one second node; in case that it is unnecessary for the calculation corresponding to the first information to use the data of the data demander, the first information is used for calculation by the at least one second node.

In an embodiment, the first information may include at least one of:
algorithm information required by the calculation;
ID of the at least one second node (ID is the abbreviation of identifier); and
ID of the first node.

Here, the algorithm information required by the calculation may include names and IDs of calculation engines and algorithms agreed on by the data demander and the data provider, algorithm usage sequence, or other information. The embodiment of the disclosure does not limit specific content of the algorithm information required by the calculation, as long as functions thereof are implemented.

In an actual application, the first information may further include data type and data set (such as names of fields which need to be included in the data, etc.) required by the calculation, which may be specifically set according to requirements of the data demander.

In an actual application, the data demander and the data provider may achieve an intention of cooperation offline, determine the first information, and store the first information in a local database of the first node; in other words, the first node may acquire the first information locally.

In an actual application, the data demander and the data provider may not negotiate offline in advance, the first node directly sends the first information to the first platform, and after receiving the first information sent by the first node, the first platform may send the first information to each second node according to ID of the second node; after receiving the first information sent by the first platform, each second node may review the first information, for example, authenticate the first node by using a preset second strategy, and perform the calculation corresponding to the first information, if authentication passes.

In an actual application, the first node may send the first information to the first platform through a fourth request, and the fourth request is configured to request performing the calculation corresponding to the first information. In other words, the fourth request includes at least the first information. After receiving the fourth request, the first platform may match (i.e., select) suitable second nodes with (for) the first node according to the first information, and then send the fourth request to each matched second node, so that the second node may perform corresponding calculation according to the first information. Here, the fourth request may also be referred to as a data usage request, a data calculation request, a data application request, etc. The embodiment of the disclosure does not limit name and specific sending time of the fourth request, as long as functions thereof are implemented.

In an actual application, the calculation corresponding to the first information may be understood as an application (which may also be referred to as a project, task, job, event, or the like, and the embodiment of the disclosure does not limit this name). The first node, the first platform and each second node need to generate a data application, that is, store information related to this application (such as the first information). Exemplarily, after receiving the first information sent by the first node, the first platform may generate the data application according to the first information, that is, locally generate and store information associated with the calculation corresponding to the first information (such as partners participating in the calculation (i.e., the first node and at least one second node, or the at least one second node), cooperation contents (i.e., calculation target), required data sets, data processing flow, and other information), and send a data application request to the first node and each second node, the request may carry relevant information of the data application and may be configured to request the first node or the second node to generate a data application; after receiving the data application request, the first node and the second node may generate the data application according to the relevant information of the data application, that is, locally store the relevant information of the data application, and send a data application request response message to the first platform after generating the data application, to notify the first platform that the first node or the second node has generated the data application.

In an actual application, before sending the first information to the first platform, the first node needs to access to the first platform. Correspondingly, before the first platform sends the first information to each second node, each second node also needs to access to the first platform.

Based on this, in an embodiment, the method may further include the following operations.

The first platform is accessed.

Here, the first node accessing to the first platform may be understood as establishing a communication connection between the first node and the first platform, and access processes may specifically include registration, login, or other processes. Exemplarily, after the data demander and the data provider achieve an intention of cooperation offline, the data demander and the data provider may sign a network access agreement in the first platform; then, the data demander may enter a management interface of a to-be-registered first node, and request acquiring a deployment package of the first node from the first platform, install the deployment package of the first node on a local server of the to-be-registered first node, and obtain a registered first node; the data provider may enter a management interface of a to-be-registered second node, and request acquiring a deployment package of the second node from the first platform, install the deployment package of the second node on a local server of the to-be-registered second node, and obtain a registered second node; the first node and the second node configure network information respectively, so that the first node and the second node may communicate with the first platform respectively; then, the first node and the second node are connected to the first platform respectively, so that the first platform activates accounts for the first node and the second node respectively, and the first node and the second node may use their activated accounts to log in to the first platform respectively, and login parameters may include user name, password, organization ID (i.e., ID of the first node and ID of the second node), or other information; after receiving login requests of the first node and the second node, the first platform may return login response messages to the first node and the second node respectively, if corresponding login parameters are correct.

In an actual application, the first node and the second node may access to the first platform synchronously (i.e., simultaneously), or may access to the first platform asynchronously.

In an actual application, the first platform may provide an algorithm package required by the calculation to the first node and/or the second node.

Based on this, in an embodiment, in case that the first information is used for joint calculation by the first node and at least one second node, and the first information includes algorithm information required by the calculation, the method may further include the following operations.

A first request is sent to the first platform based on the algorithm information required by the calculation. Here the first request is configured to request acquisition of an algorithm package required by the calculation.

The algorithm package sent by the first platform based on the first request is received.

Here, it may be understood that the first node may be deployed with a part of algorithms required by the calculation, that is, the first node is locally provided with at least one algorithm package required by the calculation. At this time, the first request may be configured to request other algorithm packages required by the calculation except the algorithm package provided by the first node itself.

In an actual application, after receiving the first request sent by the first node based on the algorithm information required by the calculation, the first platform may send the algorithm package required by the calculation to the first node based on the first request.

In an actual application, each second node may send a third request to the first platform based on the algorithm information required by the calculation, here the third request is configured to request acquisition of the algorithm package required by the calculation. After receiving the third request sent by each second node, the first platform may send the algorithm package required by the calculation to each second node based on the third request. It may be understood that each second node may be deployed with a part of algorithms required by the calculation, and at least one algorithm package required by the calculation and locally provided in each second node may be the same or different. Therefore, the algorithm package requested by the third request sent by each second node may also be the same or different.

In an actual application, the first node and the second node may acquire the algorithm package required by the calculation from the first platform synchronously, or may acquire the algorithm package required by the calculation from the first platform asynchronously.

In an actual application, the algorithm package may also be referred to as an algorithm component or the like, and may be understood as an installation package configured to deploy one or more algorithms. The embodiment of the disclosure does not limit name of the algorithm package, as long as functions thereof are implemented. Furthermore, the algorithm corresponding to the algorithm package may include extreme Gradient Boosting (XGBOOST), logistic regression, decision tree, etc. The embodiment of the disclosure does not limit type of the algorithm, as long as functions thereof are implemented.

In an actual application, in case that the first information is used for joint calculation by the first node and at least one second node, and the first information includes algorithm information required by the calculation, after receiving at least one algorithm packet sent by the first platform based on the first request, the first platform may perform the joint calculation with the at least one second node by using the first information and the received at least one algorithm package, to obtain a first calculation result.

Based on this, in an embodiment, in case that the first information is used for joint calculation by the first node and at least one second node, and the first information includes algorithm information required by the calculation, the method may further include the following operations.

The joint calculation is performed with the at least one second node by using the first information and the received algorithm package, to obtain a first calculation result.

Correspondingly, after receiving at least one algorithm packet sent by the first platform based on the third request, each second node may perform the joint calculation with the first node by using the first information and the received at least one algorithm package, so that the first node obtains the first calculation result.

Here, specific manners of the first node performing the joint calculation with the at least one second node may be set according to requirements, such as vertical federated learning or the like, which is not limited in the embodiment of the disclosure.

In an actual application, in case that the first information is used for calculation by the at least one second node, after receiving at least one algorithm package sent by the first platform based on the third request, each second node may perform calculation by using the first information and the received at least one algorithm package, to obtain a third calculation result, and send the third calculation result to the first platform; after receiving the third calculation result sent by each second node to obtain at least one third calculation result, the first platform may determine a second calculation result by using the first information and the at least one third calculation result, and send the second calculation result to the first node. Here, specific manners of the first platform determining the second calculation result by using the first information and the at least one third calculation result may be set according to requirements, such as using an algorithm specified by the first information to perform parameter fusion or the like, which is not limited in the embodiment of the disclosure.

Based on this, in an embodiment, in case that the first information is used for calculation by the at least one second node, the method may further include the following operations.

A second calculation result sent by the first platform is received, here the second calculation result is determined by the first platform using the first information and at least one third calculation result, and each of the at least one third calculation result is calculated by a respective one of the at least one second node using the first information.

In an actual application, in case that the first information is used for calculation by multiple second nodes, after receiving at least one algorithm package sent by the first platform based on the third request, each second node may perform calculation by using the first information and the received at least one algorithm package, to obtain a third calculation result, and send the third calculation result to the first platform; after receiving the third calculation result sent by each second node to obtain multiple third calculation results, the first platform may determine a second calculation result by using the first information and multiple third calculation results, and send the second calculation result to the first node.

In an actual application, in case that the first information is used for calculation by one second node, after receiving at least one algorithm package sent by the first platform based on the third request, the second node may perform calculation by using the first information and the received at least one algorithm package, to obtain a third calculation result, and may directly send the third calculation result to the first node. Here, in order to ensure data security, when the second node sends the third calculation result to the first node, the algorithm specified by the first information may be used for encryption.

Correspondingly, in an embodiment, in case that the first information is used for calculation by one second node, the method may further include the following operations.

A third calculation result sent by the second node is received, here the third calculation result is calculated by the second node using the first information and at least one algorithm package required by the calculation.

In an actual application, in order to improve security of data sharing, each second node may authenticate the first node by using a preset second strategy (specific strategy may be set according to requirements, such as a strategy for authenticating legality of the first node, or the like, which is not limited in the embodiment of the disclosure); in case that authentication passes, the joint calculation is performed with the first node by using the first information, to enable the first node to obtain a first calculation result, or the calculation is performed by using the first information, to obtain a third calculation result.

In an actual application, the data demander and the data provider may align data directories, that is, to keep names of fields contained in data stored in the data demander and the data provider consistent, so that a situation that it is unable to match a suitable data provider for the data demander due to inconsistency of the names of the fields contained in the data stored in the data demander and the data provider, or other situations, may be avoided, thereby improving calculation efficiency.

In an actual application, the first node and the second node may store data according to preset field names in a process of entering the data before storing the data, thereby keeping names of fields included in the data stored in the first node and each of the at least one second node consistent.

Based on this, in an embodiment, before sending the first information to the first platform, the method may further include the following operations.

Second information is acquired. Here the second information includes names of fields included in data entered into the first node.

The names of the fields included in the data entered into the first node are corrected by using a first database, to obtain corrected second information. Here the first database includes multiple preset field names.

The data entered into the first node is stored based on the corrected second information.

In an actual application, each second node may acquire sixth information before receiving the first information sent by the first platform, here the sixth information includes names of fields included in data entered into the second node; correct the names of the fields included in the data entered into the second node by using a second database, to obtain corrected sixth information, here the second database includes multiple preset field names; and store the data entered into the second node based on the corrected sixth information. Here, the first database and the second database include the same field names.

In an actual application, the first node and each second node may also achieve directory alignment through information interaction. In other words, the names of the fields included in the data stored in both parties (i.e., the data demander and the data provider) may be consistent through information interaction.

Based on this, in an embodiment, before sending the first information to the first platform, the method may further include the following operations.

Third information is acquired. Here the third information includes names of fields included in data stored in the first node.

Fourth information of each second node is acquired, here the fourth information includes names of fields included in data stored in the second node.

With respect to each second node, it is determined, based on the third information and the fourth information of the second node, whether the names of the fields included in the data stored in the second node are consistent with the names of the fields included in the data stored in the first node.

The third information is sent to the second node in case that the names of the fields included in the data stored in the second node are inconsistent with the names of the fields included in the data stored in the first node, to enable the second node to update the names of the fields included in the stored data by using the third information.

In an actual application, in case that the names of the fields included in the data stored in the second node are consistent with the names of the fields included in the data stored in the first node, the first node may send seventh information to the second node, here the seventh information indicates that the names of the fields included in the data stored in the second node are consistent with the names of the fields included in the data stored in the first node; after receiving the seventh information, the second node may determine that it is unnecessary to update the names of the fields included in the data stored in the second node itself.

In an embodiment, the operation of acquiring fourth information of each second node may include the following operations.

A second request is sent to each second node. Here the second request is configured to request acquisition of the fourth information of the second node.

The fourth information sent by each second node based on the second request is received.

In an actual application, in order to improve calculation efficiency, before the at least one second node performs the calculation corresponding to the first information, the first platform may verify availability of the data stored in each second node by using the fourth information of each second node. Specifically, the first platform may acquire the fourth information of each second node, and verify the availability of the data stored in each second node by using the fourth information and a preset first strategy; and send the first information to each second node, after the availability of the data is verified. Here, the first strategy may be configured to verify whether the data stored in each second node contains illegal data and/or private data (for example, verify whether a length of digits of the ID number conforms to requirements), whether a data sample conforms to a normal distribution, etc.. Specific strategy may be set according to requirements, which is not limited in the embodiment of the disclosure, as long as functions thereof are implemented.

In an actual application, in case that the availability of the data stored in each second node is verified, the first platform may send fifth information to the first node, here the fifth information indicates that the availability of the data stored in the at least one second node is verified; after receiving the fifth information, the first node performs the joint calculation with the at least one second node. In this way, calculation efficiency may be improved.

Based on this, in an embodiment, in case that the first information is used for joint calculation by the first node and at least one second node, the method may further include the following operations.

Fifth information sent by the first platform is received, here the fifth information indicates that availability of data stored in the at least one second node is verified.

The joint calculation is performed with the at least one second node after receiving the fifth information, to obtain a first calculation result; in other words, the joint calculation is performed with the at least one second node upon receiving fifth information sent by the first platform (that is, in case that the fifth information is received), to obtain a first calculation result, here the fifth information indicates that availability of data stored in the at least one second node is verified.

In an actual application, in order to ensure data security, communication between the first node and the first platform, communication between the first platform and each second node, and communication between the first node and each second node may be encrypted and transmitted by using a preset algorithm. The preset algorithm may include a privacy calculation algorithm, and may specifically include an oblivious transfer algorithm, etc. Specific type of the preset algorithm may be set according to requirements, which is not limited in the embodiment of the disclosure, as long as functions thereof are implemented.

Correspondingly, an embodiment of the disclosure further provides a method for communication, the method is applied to a first platform, and as shown in FIG. 2, the method includes the following operations 201 and 202.

In operation 201, first information sent by a first node is received.

Here, the first information is used for joint calculation by the first node and at least one second node, or used for calculation by the at least one second node, and the first information includes relevant information required by the calculation.

In operation 202, the first information is sent to each of the at least one second node.

In an embodiment, in case that the first information is used for joint calculation by the first node and at least one second node, and the first information includes algorithm information required by the calculation, the method may further include the following operations.

A first request sent by the first node based on the algorithm information required by the calculation is received. Here the first request is configured to request acquisition of an algorithm package required by the calculation.

The algorithm package required by the calculation is sent to the first node based on the first request.

In an embodiment, in case that the first information includes algorithm information required by the calculation, the method may further include the following operations.

A third request sent by each of the at least one second node based on the algorithm information required by the calculation is received. Here the third request is configured to request acquisition of an algorithm package required by the calculation.

The algorithm package required by the calculation is sent to each of the at least one second node based on the third request.

In an embodiment, in case that the first information is used for calculation by the at least one second node, the method may further include the following operations.

A third calculation result sent by each of the at least one second node is received, to obtain at least one third calculation result, here each of the at least one third calculation result is calculated by a respective one of the at least one second node using the first information.

A second calculation result is determined by using the first information and the at least one third calculation result.

The second calculation result is sent to the first node.

In an embodiment, the method may further include the following operations.

Fourth information of each of the at least one second node is acquired. Here the fourth information includes names of fields included in data stored in the second node.

Availability of the data stored in each of the at least one second node is verified by using the fourth information and a preset first strategy.

The first information is sent to each of the at least one second node, after the availability of the data is verified.

In an embodiment, the method may further include the following operations.

Fifth information is sent to the first node, here the fifth information indicates that the availability of the data stored in the at least one second node is verified.

In an embodiment, the method may further include the following operations.

The first node and the second node are accessed.

Here, it should be noted that specific processing processes of the first platform have been described above in detail and are not elaborated here.

Correspondingly, an embodiment of the disclosure further provides a method for communication, and the method is applied to a second node. The method includes the following operations.

First information sent by a first platform is received, here the first information is used for joint calculation by a first node and at least one second node, or used for calculation by the at least one second node, and the first information includes relevant information required by the calculation.

In an embodiment, in case that the first information includes algorithm information required by the calculation, the method may further include the following operations.

A third request is sent to the first platform based on the algorithm information required by the calculation, here the third request is configured to request acquisition of an algorithm package required by the calculation.

The algorithm package sent by the first platform based on the third request is received.

In an embodiment, in case that the first information is used for joint calculation by the first node and at least one second node, the method may further include the following operations.

The joint calculation is performed with the first node by using the first information and the received algorithm package, to enable the first node to obtain a first calculation result.

In an embodiment, in case that the first information is used for calculation by the at least one second node, the method may further include the following operations.

Calculation is performed by using the first information and the received algorithm package, to obtain a third calculation result.

In an embodiment, the method may further include the following operations.

The third calculation result is sent to the first platform, to enable the first platform to send a second calculation result to the first node, here the second calculation result is determined by the first platform using the first information and at least one third calculation result, and each of the at least one third calculation result is calculated by a respective one of the at least one second node using the first information.

In an embodiment, before receiving the first information sent by the first platform, the method may further include the following operations.

Sixth information is acquired. Here the sixth information includes names of fields included in data entered into the second node.

The names of the fields included in the data entered into the second node are corrected by using a second database, to obtain corrected sixth information. Here the second database includes multiple preset field names.

The data entered into the second node is stored based on the corrected sixth information.

In an embodiment, before receiving the first information sent by the first platform, the method may further include the following operations.

Fourth information is sent to the first node. Here the fourth information includes names of fields included in data stored in the second node.

Third information sent by the first node is received, here the third information includes names of fields included in data stored in the first node, and the third information is sent by the first node in case that the names of the fields included in the data stored in the second node are inconsistent with the names of the fields included in the data stored in the first node.

The names of the fields included in the stored data are updated by using the third information.

In an embodiment, the operation of sending the fourth information to the first node may include the following operations.

A second request sent by the first node is received. Here the second request is configured to request acquisition of the fourth information of the second node.

The fourth information is sent to the first node based on the second request.

In an embodiment, before receiving the first information sent by the first platform, the method may further include the following operations.

Fourth information is sent to the first platform, to enable the first platform to verify availability of the data stored in the second node by using the fourth information and a preset first strategy, here the first information is sent by the first platform after the availability of the data stored in the second node is verified.

In an embodiment, the method may further include the following operations.

The first node is authenticated by using a preset second strategy.

In case that authentication passes, the joint calculation is performed with the first node by using the first information, to enable the first node to obtain a first calculation result, or the calculation is performed by using the first information, to obtain a third calculation result.

In an embodiment, the method may further include the following operations.

The first platform is accessed.

Here, it should be noted that specific processing processes of the second node have been described above in detail and are not elaborated here.

In the method for communication provided in the embodiments of the disclosure, the first node sends first information to the first platform, here the first information is used for joint calculation by the first node and at least one second node, or used for calculation by the at least one second node, and the first information includes relevant information required by the calculation; the first platform receives the first information sent by the first node, and sends the first information to each of the at least one second node; the second node receives the first information sent by the first platform. According to the solutions provided in the embodiments of the disclosure, the data demander (i.e., the first node) sends calculation requirements (i.e., the first information) to the first platform, so that the first platform may be matched with the data provider (i.e., the second node) according to the calculation requirements, in other words, the first platform may send the calculation requirements to the data provider which is matched with the calculation requirements, so that the data provider may perform calculation according to requirements of the data demander, thereby enabling the data demander to obtain a calculation result matched with its own requirements.

Furthermore, in various embodiments of the disclosure, according to the calculation requirements of the data demander, it may achieve that data of the data provider accesses to the first platform, in a scenario where user privacy requirements of the data demander are protected and the data of the data provider does not leave (that is, the data does not leave out of the data provider's domain).

Thirdly, in various embodiments of the disclosure, the first platform may verify availability of the data of the data provider, thereby ensuring that data packages are legal and/or compliant, and further ensuring data security.

The disclosure will be further described in detail below with reference to an application embodiment.

In the application embodiment, the first node is referred to as DRN, the first platform is referred to as DSSP or DSP, the second node is referred to as DSN, the data demander is deployed with the DRN, and the data provider is deployed with the DSN.

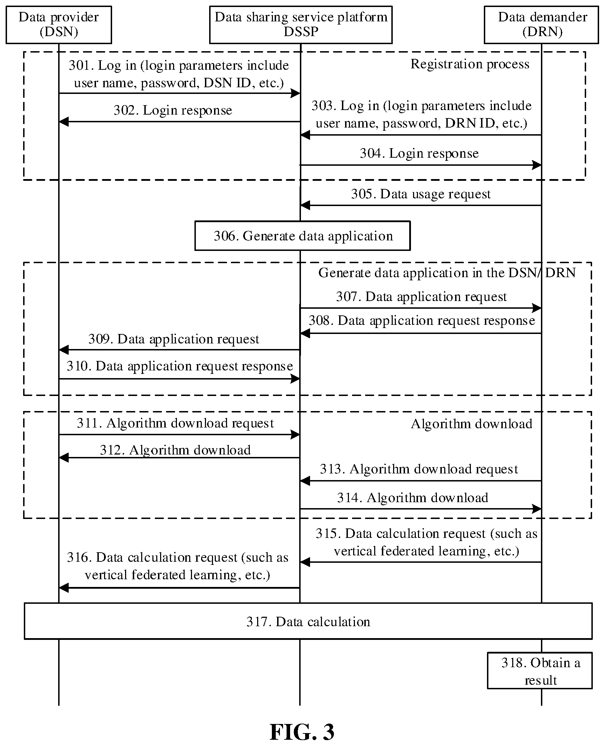

A process in which data on both the data demander side and the data provider side need to access to the DSSP or the DSP to implement data circulation, will be described below with reference to FIG. 3.

As shown in FIG. 3, in case that the data of the data demander needs to participate in calculation while the data does not leave, a process of implementing data access and data circulation may include the following operations 301 to 318.

In operation 301, the data provider logs in (i.e., accesses to) the DSSP (or the DSP) through the DSN, login parameters may include user name, password, DSN ID or the like, and then, operation 302 is performed.

In operation 302, the DSSP returns a login response to the DSN, and then, operation 303 is performed.

In operation 303, the data demander logs in (i.e., accesses to) the DSSP through the DRN, login parameters may include user name, password, DRN ID or the like, and then, operation 304 is performed.

In operation 304, the DSSP returns a login response to the DRN, and then, operation 305 is performed.

In operation 305, the DRN sends a data usage request (i.e., the fourth request) to the DSSP, and then, operation 306 is performed.

Here, the data usage request may include the first information, that is, information of the data provider (such as DSN ID) participating in the calculation this time, information of the data demander (such as DRN ID) participating in the calculation this time, information of the required algorithm, etc.

In operation 306, the DSSP generates a data application (or project), and then, operation 307 is performed.

In operation 307, the DSSP sends a data application request to the DRN, and then, operation 308 is performed.

In operation 308, the DRN returns a data application request response to the DSSP, and then, operation 309 is performed.

In operation 309, the DSSP sends a data application request to the DSN, and then, operation 310 is performed.

Here, the DSSP may send the data application request to the DSN according to request (i.e., requirement) of the data demander. That is, the data application request may include the first information.

In operation 310, the DSN returns a data application request response to the DSSP, and then, operation 311 is performed.

In operation 311, the DSN sends an algorithm download request to the DSSP, and then, operation 312 is performed.

In operation 312, the DSN acquires (i.e., downloads) an algorithm from the DSSP, and then, operation 313 is performed.

In operation 313, the DRN sends an algorithm download request to the DSSP, and then, operation 314 is performed.

In operation 314, the DRN acquires (i.e., downloads) an algorithm from the DSSP, and then, operation 315 is performed.

In operation 315, the DRN sends a data calculation request (such as vertical federated learning, etc.) to the DSSP, and then, operation 316 is performed.

In operation 316, the DSSP sends a data calculation request to the DSN, and then, operation 317 is performed.

In operation 317, the DSN and the DRN perform data calculation, and then, operation 318 is performed.

Here, the DSN and the DRN perform joint calculation by using the algorithm agreed on for this data application.

In operation 318, the DRN obtains a result (i.e., the first calculation result); in other words, the data demander obtains desired data.

In an actual application, operation 301 and operation 303 may be performed synchronously (i.e., simultaneously); operation 311 and operation 313 may also be performed synchronously.

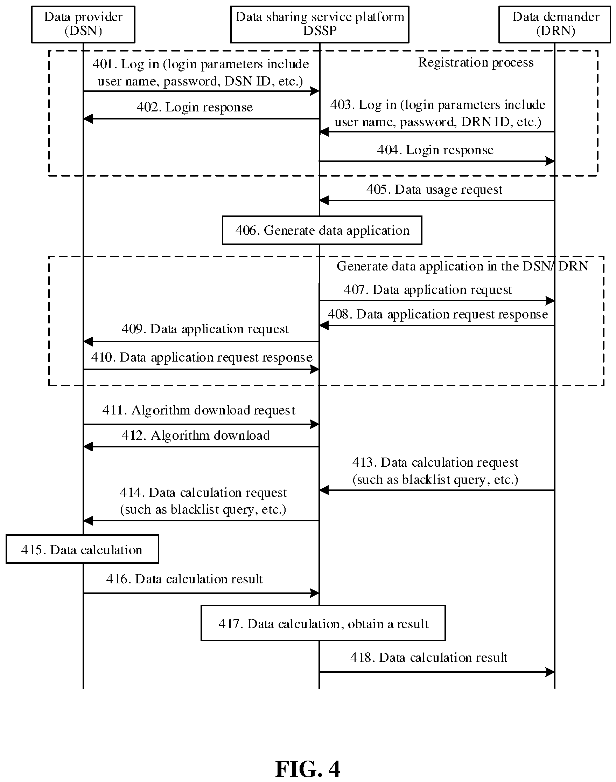

A process in which it is unnecessary for the data demander to provide data and only data on the data provider side needs to access to the DSSP or the DSP to implement data circulation, will be described below with reference to FIG. 4.

As shown in FIG. 4, in case that it is unnecessary for the data of the data demander to participate in calculation while the data does not leave, a process of implementing data access and data circulation may include the following operations 401 to 418.

In operation 401, the data provider logs in (i.e., accesses to) the DSSP through the DSN, login parameters may include user name, password, DSN ID or the like, and then, operation 402 is performed.

In operation 402, the DSSP returns a login response to the DSN, and then, operation 403 is performed.

In operation 403, the data demander logs in (i.e., accesses to) the DSSP through the DRN, login parameters may include user name, password, DRN ID or the like, and then, operation 404 is performed.

In operation 404, the DSSP returns a login response to the DRN, and then, operation 405 is performed.

In operation 405, the DRN sends a data usage request (i.e., the fourth request) to the DSSP, and then, operation 406 is performed.

Here, the data usage request may include the first information, that is, information of the data provider (such as DSN ID) participating in the calculation this time, information of the data demander (such as DRN ID) participating in the calculation this time, information of the required algorithm, etc.

In operation 406, the DSSP generates a data application (or project), and then, operation 407 is performed.

In operation 407, the DSSP sends a data application request to the DRN, and then, operation 408 is performed.

In operation 408, the DRN returns a data application request response to the DSSP, and then, operation 409 is performed.

In operation 409, the DSSP sends a data application request to the DSN, and then, operation 410 is performed.

Here, the DSSP may send the data application request to the DSN according to request (i.e., requirement) of the data demander. That is, the data application request may include the first information.

In operation 410, the DSN returns a data application request response to the DSSP, and then, operation 411 is performed.

In operation 411, the DSN sends an algorithm download request to the DSSP, and then, operation 412 is performed.

In operation 412, the DSN acquires (i.e., downloads) an algorithm from the DSSP, and then, operation 413 is performed.

In operation 413, the DRN sends a data calculation request (such as blacklist query, etc.) to the DSSP, and then, operation 414 is performed.

In operation 414, the DSSP sends a data calculation request to the DSN, and then, operation 415 is performed.

In operation 415, the DSN performs data calculation, and then, operation 416 is performed.

Here, the DSN performs corresponding calculation at its own side (i.e., locally) according to the agreed algorithm and requirements of the DRN (i.e., the first information).

In operation 416, the DSN sends a data calculation result (i.e., the third calculation result) to the DSSP, and then, operation 417 is performed.

Here, the DSN may transmit the calculation result to the DSSP by way of private calculation, such as an oblivious transfer technology, etc.

In operation 417, the DSSP performs data calculation and obtains a result (i.e., the second calculation result), and then, operation 418 is performed.

Here, the DSSP performs calculation at its own side (i.e., locally) according to the calculation result sent by the DSN, and obtains a final data calculation result (i.e., the second calculation result).

In operation 418, the DSSP sends the data calculation result to the DRN.

In an actual application, operation 401 and operation 403 may be performed synchronously (i.e., simultaneously).

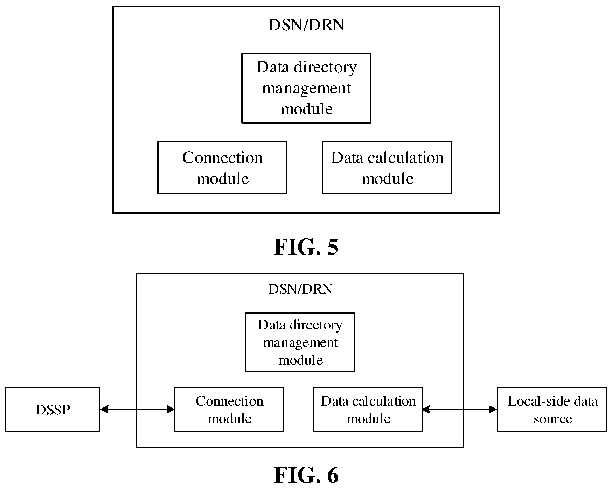

Structures of the DSN and the DRN will be described below with reference to FIG. 5.

In the application embodiment, each of the DSN and the DRN may be understood as a data access apparatus configured to access massive data to the DSSP (or the DSP) in case that local data does not leave, to implement data circulation. As shown in FIG. 5, each of the DSN and the DRN includes a connection module, a data calculation module and a data directory management module. Functions of the connection module may include: interconnecting with the DSSP network, that is, communicating with the DSSP; maintaining (that is, keeping) the connection relationship with the DSSP, in other words, keeping communication with the DSSP, sending a request (such as the first request etc.) to the DSSP, and receiving request (such as the data application request) and response of the DSSP. Functions of the data calculation module may include: receiving a data application request from the connection module; completing data calculation according to the data application request, such as model training, model output, operation result output, etc. Functions of the data directory management module may include: issuing a data directory of a local-side data source (i.e., names of fields included in the local-side data) to the DSSP; and aligning the data directory with that of an opposite-side data source. Here, external connections of the DSN and the DRN (i.e., connections with the DSSP and the local-side data source) are shown in FIG. 6.

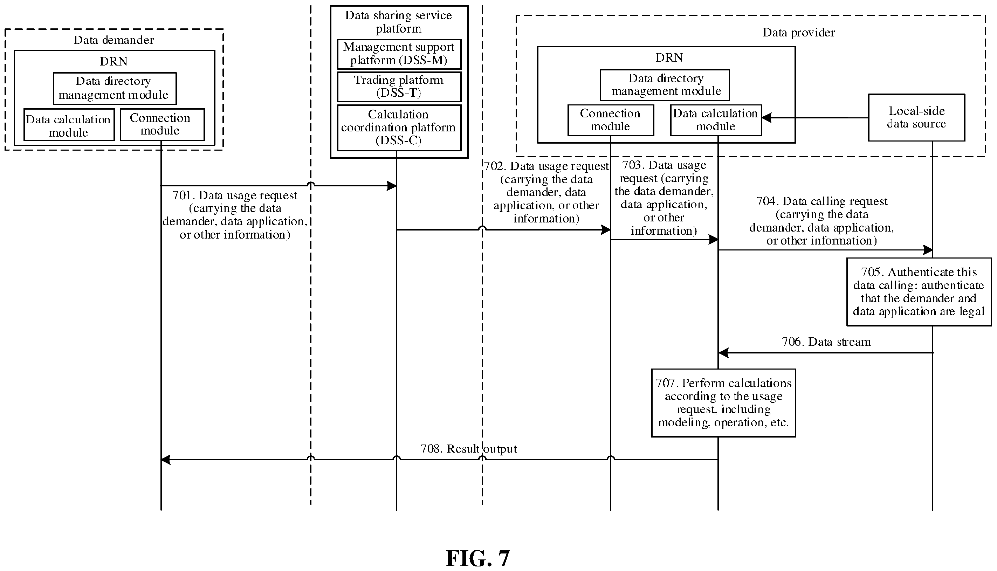

Another data circulation process in case that local data does not leave will be described below with reference to FIG. 7.

As shown in FIG. 7, the DSSP includes a management support platform (Data Sharing Service-Management, DSS-M), a trading platform (Data Sharing Service-Trading, DSS-T), and a calculation coordination platform (Data Sharing Service-Calculation, DSS-C). The data circulation process among the DRN, the DSSP and the DSN may include the following operations 701 to 708.

In operation 701, the connection module of the DRN sends a data usage request (i.e., the fourth request) to the DSSP (or the DSP), and then, operation 702 is performed.

Here, the data demander sends a data usage request to the DSS-C through the connection module of the DRN. In other words, the data usage request may include the data demander, data application, or other information (such as the first information).

In operation 702, the DSSP sends a data usage request to the connection module of the DSN, and then, operation 703 is performed.

Here, the DSS-C sends a data usage request to the connection module of the DSN.

In operation 703, the connection module of the DSN sends a data usage request to the data calculation module of the DSN, and then, operation 704 is performed.

Here, the connection module of the DSN forwards the data usage request to the data calculation module.

In operation 704, the data calculation module of the DSN sends a data calling request to the local-side data source (i.e., a database of the data provider), and then, operation 705 is performed.

Here, the data calling request may be understood as a data reading request.

In operation 705, the local-side data source authenticates this data calling: authenticates that the demander and data application are legal, and then, operation 706 is performed.

Here, during authentication, the data demander may allow this data reading after determining that the data demander and the data application are legal and allowed.

In operation 706, a data stream from the local-side data source is transmitted to the data calculation module of the DSN, and then, operation 707 is performed.

In operation 707, the data calculation module of the DSN performs calculations according to the usage request, including modeling, operation (such as operation of a specified algorithm) or the like, and then, operation 708 is performed.

In operation 708, the data calculation module of the DSN transmits a result (i.e., the third calculation result) to the connection module of the DRN through the connection module of the DSN.

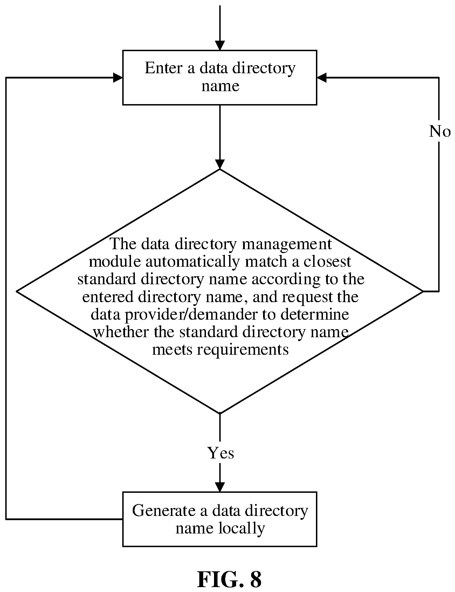

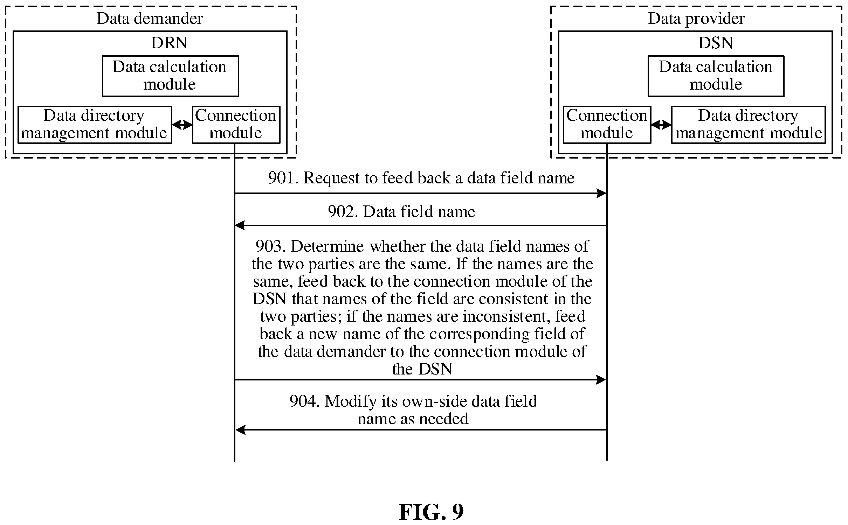

In the application embodiment, the data directory of the data demander needs to be aligned with the data directory of the data provider before data circulation. Two manners of aligning data directories will be described below with reference to FIG. 8 and FIG. 9.

In an actual application, the data provider may issue its own-side data directory in the DSSP (or the DSP) through the data directory management module of the DSN, that is, issue a directory of names of fields included in the data of the data provider, to be viewed by the data demander, so as to screen whether the data of the data provider meets requirements of the data demander. If there is a case where both the data provider and the data demander have the same type of data, while their data directories names are inconsistent, the data demander may not match the data provider meeting the requirements, thus data directory alignment needs to be performed.

As shown in FIG. 8, the DRN and the DSN may align names of fields included in the entered data by using the data directory management module, so that data directories of the same type of data of the data demander and the data provider keep consistent, that is, the names of the fields included in the data keep consistent.

Specifically, the data directory management module may provide a data directory standard name database (i.e., the first database and the second database), and the data provider or the data demander inputs, to the data directory management module, a data directory name, i.e., a field name; the data directory management module automatically matches, according to the input directory name, a standard name closest to the input directory name from the data directory standard name database, and presents the standard name to the data provider or the data demander, to request the data provider or the data demander to determine whether the standard name is the directory name that the data provider or the data demander wants to enter. If the standard name is the directory name that the data provider or the data demander wants to enter, the data provider or the data demander may enter a next data directory name according to requirements; if the standard name is not the directory name that the data provider or the data demander wants to enter, the data provider or the data demander may be requested to return and modify the directory name input to the data directory management module.

In an actual application, when a directory name input by the data provider or the data demander multiple times (a times threshold may be set according to requirements) does not match a standard name all the time, the data directory management module may enter the directory name into a candidate directory list of the data directory standard name database, to be reviewed by the DSSP (or the DSP) to determine whether the directory name should be recorded in the data directory standard name database.

As shown in FIG. 9, another data directory alignment process may include the following operations 901 to 904.

In operation 901, the DRN requests the DSN to feed back a data field name, and then, operation 902 is performed.

Here, the data demander may send, through the connection module of the DRN, the data field name which may be the same as that of the DSN to the connection module of the DSN, and request the data provider to feed back a data field name.

In operation 902, the DSN feeds back the data field name to the DRN, and then, operation 903 is performed.

Here, the data provider receives the request through the connection module of the DSN, and feeds back a field name included in data stored in the data provider itself to the data demander.

In operation 903, the DRN determines whether the data field names of the two parties are the same. If the data field names of the two parties are the same, the DRN feeds back to the connection module of the DSN that names of the field are consistent in the two parties (i.e., the seventh information); if the names are inconsistent, the DRN feeds back a new name of the corresponding field of the data demander (i.e., the third information) to the connection module of the DSN, and then, operation 904 is performed.

Here, the data demander acquires information of the data field name of the data provider (i.e., the fourth information) through the connection module of the DRN. If the names of the two parties are the same, the data demander feeds back to the connection module of the DSN of the data provider that names of the field are consistent in the two parties (i.e., the seventh information); if the names are inconsistent, the data demander feeds back a new name of the field of the data demander (i.e., the third information) to the connection module of the DSN of the data provider.

In operation 904, the DSN modifies data field name of its own-side as needed.

Here, the data provider modifies field name of its own-side according to the new name of the data demander, and synchronizes the modification information to the data demander through the connection module of the DSN. The data directory alignment process ends.

In the application embodiment, the DSSP (or the DSP) may perform verification of data availability on the data provider, that is, verify that the data of the data provider is legal, compliant and available. Specifically, after receiving the data directory (i.e., the fourth information) from the data provider, the DSSP (or the DSP) may verify the data availability according to the data directory, for example, randomly inspect whether there is illegal data, check whether a length of digits of the ID number conforms to requirements, check whether a data sample conforms to a normal distribution, etc.

According to the solution provided in the application embodiment, massive data may be accessed to the DSSP (or the DSP) in case that local data does not leave, to implement data circulation and avoid data leakage. Furthermore, directory alignment may be performed by using the data directory standard name library provided by the data directory management module, to calibrate the directory name input to the data directory management module by the data provider or the data demander, which may ensure that data directory names of the data provider and the data demander have readability and matchability in the system; or directory alignment may be implemented through the process shown in FIG. 9, to improve data sharing efficiency.

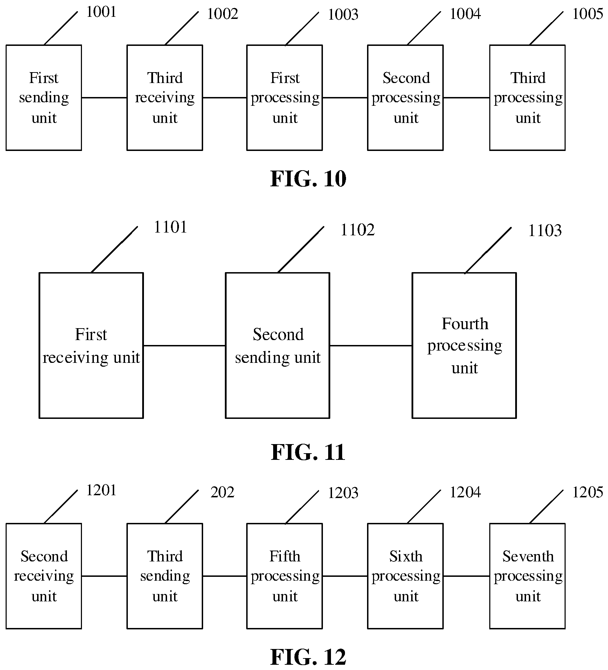

In order to implement the method on the first node side according to the embodiment of the disclosure, an embodiment of the disclosure further provides an apparatus for communication, the apparatus is arranged in a first node, and as shown in FIG. 10, the apparatus includes a first sending unit 1001.

The first sending unit 1001 is configured to send first information to a first platform, here the first information is used for joint calculation by the first node and at least one second node, or used for calculation by the at least one second node, and the first information includes relevant information required by the calculation.

In an embodiment, in case that the first information is used for joint calculation by the first node and at least one second node, and the first information includes algorithm information required by the calculation, the first sending unit 1001 is further configured to send a first request to the first platform based on the algorithm information required by the calculation, here the first request is configured to request acquisition of an algorithm package required by the calculation.

Correspondingly, as shown in FIG. 10, the apparatus may further include a third receiving unit 1002, the third receiving unit 1002 is configured to receive the algorithm package sent by the first platform based on the first request.

In an embodiment, as shown in FIG. 10, the apparatus may further include a first processing unit 1003, the first processing unit 1003 is configured to perform the joint calculation with the at least one second node by using the first information and the received algorithm package, to obtain a first calculation result.

In an embodiment, in case that the first information is used for calculation by the at least one second node, the third receiving unit 1002 is further configured to receive a second calculation result sent by the first platform, here the second calculation result is determined by the first platform using the first information and at least one third calculation result, and each of the at least one third calculation result is calculated by a respective one of the at least one second node using the first information.

In an embodiment, as shown in FIG. 10, the apparatus may further include a second processing unit 1004, the second processing unit 1004 is configured to:
acquire second information, here the second information includes names of fields included in data entered into the first node;
correct the names of the fields included in the data entered into the first node by using a first database, to obtain corrected second information, here the first database includes multiple preset field names; and
store, based on the corrected second information, the data entered into the first node.

In an embodiment, the second processing unit 1004 is further configured to:
acquire third information, here the third information includes names of fields included in data stored in the first node;
acquire fourth information of each of the at least one second node, here the fourth information includes names of fields included in data stored in the second node;
with respect to each of the at least one second node, determine, based on the third information and the fourth information of the second node, whether the names of the fields included in the data stored in the second node are consistent with the names of the fields included in the data stored in the first node; and
send the third information to the second node in case that the names of the fields included in the data stored in the second node are inconsistent with the names of the fields included in the data stored in the first node, to enable the second node to update the names of the fields included in the stored data by using the third information.

In an embodiment, the second processing unit 1004 is further configured to:
send a second request to each of the at least one second node, here the second request is configured to request acquisition of the fourth information of the second node; and
receive the fourth information sent by each of the at least one second node based on the second request.

In an embodiment, in case that the first information is used for joint calculation by the first node and at least one second node, the third receiving unit 1002 is further configured to receive fifth information sent by the first platform, here the fifth information indicates that availability of data stored in the at least one second node is verified.

Correspondingly, the first processing unit 1003 is further configured to perform the joint calculation with the at least one second node after receiving the fifth information, to obtain a first calculation result; in other words, perform the joint calculation with the at least one second node upon receiving fifth information sent by the first platform (that is, in case that the fifth information is received), to obtain a first calculation result.

In an embodiment, as shown in FIG. 10, the apparatus may further include a third processing unit 1005, the third processing unit 1005 is configured to access to the first platform.

Here, functions of the first sending unit 1001, the third receiving unit 1002 and the third processing unit 1005 are equivalent to functions of the connection module of the DRN in the application embodiment of the disclosure; functions of the first processing unit 1003 are equivalent to functions of the data calculation module of the DRN in the application embodiment of the disclosure; functions of the second processing unit 1004 are equivalent to functions of the data directory management module of the DRN in the application embodiment of the disclosure.

In an actual application, the first sending unit 1001 and the third receiving unit 1002 may be implemented by a communication interface in the apparatus for communication; the first processing unit 1003, the second processing unit 1004 and the third processing unit 1005 may be implemented by a processor in apparatus for communication in combination with the communication interface.

In order to implement the method on the first platform side according to the embodiment of the disclosure, an embodiment of the disclosure further provides an apparatus for communication, the apparatus is arranged in a first platform, and as shown in FIG. 11, the apparatus includes a first receiving unit 1101 and a second sending unit 1102.

The first receiving unit 1101 is configured to receive first information sent by a first node, here the first information is used for joint calculation by the first node and at least one second node, or used for calculation by the at least one second node, and the first information includes relevant information required by the calculation.

The second sending unit 1102 is configured to send the first information to each of the at least one second node.

In an embodiment, in case that the first information is used for joint calculation by the first node and at least one second node, and the first information includes algorithm information required by the calculation, the first receiving unit 1101 is further configured to receive a first request sent by the first node based on the algorithm information required by the calculation, here the first request is configured to request acquisition of an algorithm package required by the calculation.

Correspondingly, the second sending unit 1102 is further configured to send the algorithm package required by the calculation to the first node based on the first request.

In an embodiment, in case that the first information includes algorithm information required by the calculation, the first receiving unit 1101 is further configured to receive a third request sent by each of the at least one second node based on the algorithm information required by the calculation, here the third request is configured to request acquisition of an algorithm package required by the calculation.

Correspondingly, the second sending unit 1102 is further configured to send the algorithm package required by the calculation to each of the at least one second node based on the third request.

In an embodiment, in case that the first information is used for calculation by the at least one second node, the first receiving unit 1101 is further configured to receive a third calculation result sent by each of the at least one second node, to obtain at least one third calculation result, here each of the at least one third calculation result is calculated by a respective one of the at least one second node using the first information.

Correspondingly, as shown in FIG. 11, the apparatus may further include a fourth processing unit 1103, the fourth processing unit 1103 is configured to determine a second calculation result by using the first information and the at least one third calculation result.

The second sending unit 1102 is further configured to send the second calculation result to the first node.

In an embodiment, the fourth processing unit 1103 is further configured to:
acquire fourth information of each of the at least one second node, here the fourth information includes names of fields included in data stored in the second node;
verify availability of the data stored in each of the at least one second node by using the fourth information and a preset first strategy; and
send the first information to each of the at least one second node, after the availability of the data is verified.

In an embodiment, the second sending unit 1102 is further configured to send fifth information to the first node, here the fifth information indicates that the availability of the data stored in the at least one second node is verified.

In an embodiment, the second sending unit 1102 is further configured to access to the first node and the second node.

In an actual application, the first receiving unit 1101 and the second sending unit 1102 may be implemented by a communication interface in the apparatus for communication; the fourth processing unit 1103 may be implemented by a processor in apparatus for communication in combination with the communication interface.

In order to implement the method on the second node side according to the embodiment of the disclosure, an embodiment of the disclosure further provides an apparatus for communication, the apparatus is arranged in a second node, and as shown in FIG. 12, the apparatus includes a second receiving unit 1201.

The second receiving unit 1201 is configured to receive first information sent by a first platform, here the first information is used for joint calculation by a first node and at least one second node, or used for calculation by the at least one second node, and the first information includes relevant information required by the calculation.

In an embodiment, as shown in FIG. 12, the apparatus may further include a third sending unit 1202.

In case that the first information includes algorithm information required by the calculation, the third sending unit 1202 is configured to send a third request to the first platform based on the algorithm information required by the calculation, here the third request is configured to request acquisition of an algorithm package required by the calculation.

Correspondingly, the second receiving unit 1201 is further configured to receive the algorithm package sent by the first platform based on the third request.

In an embodiment, as shown in FIG. 12, the apparatus may further include a fifth processing unit 1203.

In case that the first information is used for joint calculation by the first node and at least one second node, the fifth processing unit 1203 is configured to perform the joint calculation with the first node by using the first information and the received algorithm package, to enable the first node to obtain a first calculation result.

In an embodiment, in case that the first information is used for calculation by the at least one second node, the fifth processing unit 1203 is further configured to perform calculation by using the first information and the received algorithm package, to obtain a third calculation result.

In an embodiment, the third sending unit 1202 is further configured to send the third calculation result to the first platform, to enable the first platform to send a second calculation result to the first node, here the second calculation result is determined by the first platform using the first information and at least one third calculation result, and each of the at least one third calculation result is calculated by a respective one of the at least one second node using the first information.

In an embodiment, as shown in FIG. 12, the apparatus may further include a sixth processing unit 1204, the sixth processing unit 1204 is configured to:
acquire sixth information, here the sixth information includes names of fields included in data entered into the second node;
correct the names of the fields included in the data entered into the second node by using a second database, to obtain corrected sixth information, here the second database includes multiple preset field names; and
store, based on the corrected sixth information, the data entered into the second node.

In an embodiment, the sixth processing unit 1204 is further configured to:
send fourth information to the first node, here the fourth information includes names of fields included in data stored in the second node;
receive third information sent by the first node, here the third information includes names of fields included in data stored in the first node, and the third information is sent by the first node in case that the names of the fields included in the data stored in the second node are inconsistent with the names of the fields included in the data stored in the first node; and
update the names of the fields included in the stored data by using the third information.

In an embodiment, the sixth processing unit 1204 is further configured to:
receive a second request sent by the first node, here the second request is configured to request acquisition of the fourth information of the second node; and
send the fourth information to the first node based on the second request.

In an embodiment, the third sending unit 1202 is further configured to send fourth information to the first platform, to enable the first platform to verify availability of the data stored in the second node by using the fourth information and a preset first strategy, here the first information is sent by the first platform after the availability of the data stored in the second node is verified.

In an embodiment, the fifth processing unit 1203 is further configured to:
authenticate the first node by using a preset second strategy; and
in case that authentication passes, perform the joint calculation with the first node by using the first information, to enable the first node to obtain a first calculation result, or perform the calculation by using the first information, to obtain a third calculation result.

In an embodiment, as shown in FIG. 12, the apparatus may further include a seventh processing unit 1205, the seventh processing unit 1205 is configured to access to the first platform.

Here, functions of the second receiving unit 1201, the third sending unit 1202 and the seventh processing unit 1205 are equivalent to functions of the connection module of the DSN in the application embodiment of the disclosure; functions of the fifth processing unit 1203 are equivalent to functions of the data calculation module of the DSN in the application embodiment of the disclosure; functions of the sixth processing unit 1204 are equivalent to functions of the data directory management module of the DSN in the application embodiment of the disclosure.

In an actual application, the second receiving unit 1201 and the third sending unit 1202 may be implemented by a communication interface in the apparatus for communication; the fifth processing unit 1203, the sixth processing unit 1204 and the seventh processing unit 1205 may be implemented by a processor in the apparatus for communication in combination with the communication interface.

It should be noted that when the apparatus for communication provided in the above embodiments performs communications, division of the above program modules is exemplified only. In an actual application, the above processes may be allocated to be completed by different program modules according to requirements, that is, internal structures of the apparatus are divided into different program modules to complete all or part of the above processes. Furthermore, the apparatus for communication provided in the above embodiments belongs to the same concept as embodiments of the method for communication, specific implementation processes thereof may refer to the embodiments of the method for the details, which are not elaborated here.

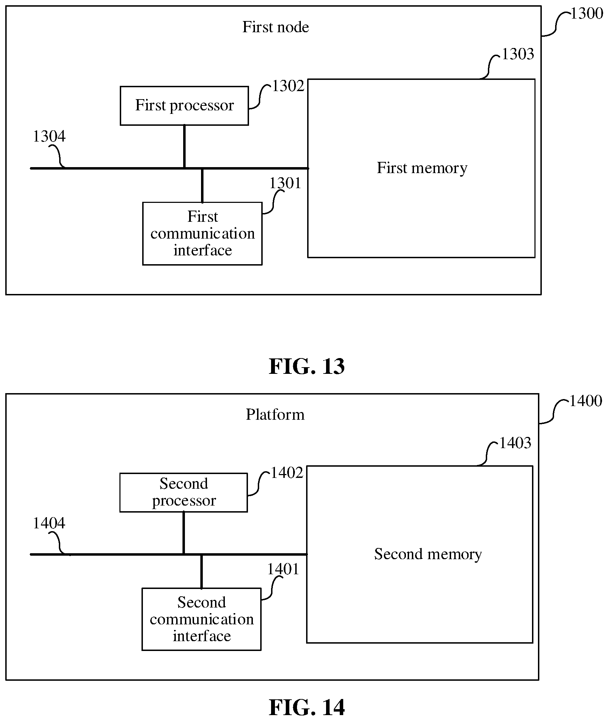

Based on hardware implementation of the above program modules, and in order to implement the method on the first node side according to the embodiment of the disclosure, an embodiment of the disclosure further provides a first node, and as shown in FIG. 13, the first node 1300 includes a first communication interface 1301, a first processor 1302 and a first memory 1303.

The first communication interface 1301 is capable of performing information interaction with other nodes and/or a first platform.

The first processor 1302 is connected to the first communication interface 1301 to implement information interaction with other nodes and/or the first platform, and is configured to perform methods provided by one or more technical solutions on the above first node side when the first processor 1302 executes a computer program.

The computer program is stored on the first memory 1303.

Specifically, the first communication interface 1301 is configured to send first information to a first platform, here the first information is used for joint calculation by the first node 1300 and at least one second node, or used for calculation by the at least one second node, and the first information includes relevant information required by the calculation.

In an embodiment, in case that the first information is used for joint calculation by the first node 1300 and at least one second node, and the first information includes algorithm information required by the calculation, the first communication interface 1301 is further configured to:
send a first request to the first platform based on the algorithm information required by the calculation, here the first request is configured to request acquisition of an algorithm package required by the calculation; and
receive the algorithm package sent by the first platform based on the first request.

In an embodiment, the first processor 1302 is configured to perform the joint calculation with the at least one second node through the first communication interface 1301 by using the first information and the received algorithm package, to obtain a first calculation result.

In an embodiment, in case that the first information is used for calculation by the at least one second node, the first communication interface 1301 is further configured to receive a second calculation result sent by the first platform, here the second calculation result is determined by the first platform using the first information and at least one third calculation result, and each of the at least one third calculation result is calculated by a respective one of the at least one second node using the first information.

In an embodiment, the first processor 1302 is further configured to:
acquire second information through the first communication interface 1301, here the second information includes names of fields included in data entered into the first node 1300;
correct the names of the fields included in the data entered into the first node 1300 by using a first database, to obtain corrected second information, here the first database includes multiple preset field names; and
store, based on the corrected second information, the data entered into the first node 1300.

In an embodiment, the first processor 1302 is further configured to:
acquire third information through the first communication interface 1301, here the third information includes names of fields included in data stored in the first node 1300;
acquire fourth information of each of the at least one second node through the first communication interface 1301, here the fourth information includes names of fields included in data stored in the second node;
with respect to each of the at least one second node, determine, based on the third information and the fourth information of the second node, whether the names of the fields included in the data stored in the second node are consistent with the names of the fields included in the data stored in the first node 1300; and
send the third information to the second node through the first communication interface 1301 in case that the names of the fields included in the data stored in the second node are inconsistent with the names of the fields included in the data stored in the first node 1300, to enable the second node to update the names of the fields included in the stored data by using the third information.

In an embodiment, the first processor 1302 is further configured to:
send a second request to each of the at least one second node through the first communication interface 1301, here the second request is configured to request acquisition of the fourth information of the second node; and
receive, through the first communication interface 1301, the fourth information sent by each of the at least one second node based on the second request.

In an embodiment, in case that the first information is used for joint calculation by the first node 1300 and at least one second node, the first processor 1302 is further configured to:
receive, through the first communication interface 1301, fifth information sent by the first platform, here the fifth information indicates that availability of data stored in the at least one second node is verified; and
perform the joint calculation with the at least one second node after receiving the fifth information, to obtain a first calculation result; in other words, perform the joint calculation with the at least one second node upon receiving fifth information sent by the first platform (that is, in case that the fifth information is received), to obtain a first calculation result.

In an embodiment, the first processor 1302 is further configured to access to the first platform through the first communication interface 1301.

It should be noted that specific processing processes of the first communication interface 1301 and the first processor 1302 may be understood with reference to the above methods and are not elaborated here.

Of course, in an actual application, various components in the first node 1300 are coupled together through a bus system 1304. It may be understood that the bus system 1304 is configured to implement connection and communication among these components. The bus system 1304 includes a power bus, a control bus and a status signal bus, in addition to a data bus. However, for the sake of clarity, various buses are labeled as the bus system 1304 in FIG. 13.

The first memory 1303 in the embodiment of the disclosure is configured to store various types of data to support operations of the first node 1300. Examples of such data include any computer program configured to operate on the first node 1300.

The methods disclosed in the above embodiments of the disclosure may be applied to the first processor 1302 or implemented by the first processor 1302. The first processor 1302 may be an integrated circuit chip with signal processing capability. During implementation, each operation of the above methods may be completed by an integrated logic circuit in form of hardware in the first processor 1302 or instructions in form of software. The above first processor 1302 may be a general-purpose processor, a Digital Signal Processor (DSP) or other programmable logic devices, a discrete gate or a transistor logic device, a discrete hardware component, etc. The first processor 1302 may implement or perform various methods, operations and logic block diagrams disclosed in the embodiments of the disclosure. The general-purpose processor may be a microprocessor or any conventional processor, etc. Operations of the methods disclosed in combination with the embodiments of the disclosure may be directly embodied as being performed and completed by a hardware decoding processor, or performed and completed by a combination of hardware in the decoding processor and software modules. The software module may be located in a storage medium, and the storage medium is located in the first memory 1303. The first processor 1302 reads information in the first memory 1303, and completes operations of the foregoing methods in combination with hardware thereof.

In an exemplary embodiment, the first node 1300 may be implemented by one or more of an Application Specific Integrated Circuit (ASIC), a DSP, a Programmable Logic Device (PLD), a Complex Programmable Logic Device (CPLD), a Field-Programmable Gate Array (FPGA), a general-purpose processor, a controller, a Micro Controller Unit (MCU), a microprocessor or other electronic components, to perform the foregoing methods.

Based on hardware implementation of the above program modules, and in order to implement the method on the first platform side according to the embodiment of the disclosure, an embodiment of the disclosure further provides a platform, and as shown in FIG. 14, the platform 1400 includes a second communication interface 1401, a second processor 1402 and a second memory 1403.

The second communication interface 1401 is capable of performing information interaction with a first node and/or a second node.

The second processor 1402 is connected to the second communication interface 1401 to implement information interaction with the first node and/or the second node, and is configured to perform methods provided by one or more technical solutions on the above first platform side when the second processor 1402 executes a computer program.

The computer program is stored on the second memory 1403.

Specifically, the second communication interface 1401 is configured to:
receive first information sent by a first node, here the first information is used for joint calculation by the first node and at least one second node, or used for calculation by the at least one second node, and the first information includes relevant information required by the calculation;
send the first information to each of the at least one second node.

In an embodiment, in case that the first information is used for joint calculation by the first node and at least one second node, and the first information includes algorithm information required by the calculation, the second communication interface 1401 is further configured to:
receive a first request sent by the first node based on the algorithm information required by the calculation, here the first request is configured to request acquisition of an algorithm package required by the calculation; and
send the algorithm package required by the calculation to the first node based on the first request.

In an embodiment, in case that the first information includes algorithm information required by the calculation, the second communication interface 1401 is further configured to:
receive a third request sent by each of the at least one second node based on the algorithm information required by the calculation, here the third request is configured to request acquisition of an algorithm package required by the calculation; and
send the algorithm package required by the calculation to each of the at least one second node based on the third request.

In an embodiment, in case that the first information is used for calculation by the at least one second node, the second processor 1402 is configured to:
receive, through the second communication interface 1401, a third calculation result sent by each of the at least one second node, to obtain at least one third calculation result, here each of the at least one third calculation result is calculated by a respective one of the at least one second node using the first information;
determine a second calculation result by using the first information and the at least one third calculation result; and
send the second calculation result to the first node through the second communication interface 1401.

In an embodiment, the second processor 1402 is further configured to:
acquire fourth information of each of the at least one second node through the second communication interface 1401, here the fourth information includes names of fields included in data stored in the second node;
verify availability of the data stored in each of the at least one second node by using the fourth information and a preset first strategy; and
send the first information to each of the at least one second node, after the availability of the data is verified.

In an embodiment, the second processor 1402 is further configured to send fifth information to the first node through the second communication interface 1401, here the fifth information indicates that the availability of the data stored in the at least one second node is verified.

In an embodiment, the second processor 1402 is further configured to access to the first node and the second node through the second communication interface 1401.

It should be noted that specific processing processes of the second communication interface 1401 and the second processor 1402 may be understood with reference to the above methods and are not elaborated here.

Of course, in an actual application, various components in the platform 1400 are coupled together through a bus system 1404. It may be understood that the bus system 1404 is configured to implement connection and communication among these components. The bus system 1404 includes a power bus, a control bus and a status signal bus, in addition to a data bus. However, for the sake of clarity, various buses are labeled as the bus system 1404 in FIG. 14.

The second memory 1403 in the embodiment of the disclosure is configured to store various types of data to support operations of the platform 1400. Examples of such data include any computer program configured to operate on the platform 1400.

The methods disclosed in the above embodiments of the disclosure may be applied to the second processor 1402 or implemented by the second processor 1402. The second processor 1402 may be an integrated circuit chip with signal processing capability. During implementation, each operation of the above methods may be completed by an integrated logic circuit in form of hardware in the second processor 1402 or instructions in form of software. The above second processor 1402 may be a general-purpose processor, a DSP or other programmable logic devices, a discrete gate or a transistor logic device, a discrete hardware component, etc. The second processor 1402 may implement or perform various methods, operations and logic block diagrams disclosed in the embodiments of the disclosure. The general-purpose processor may be a microprocessor or any conventional processor, etc. Operations of the methods disclosed in combination with the embodiments of the disclosure may be directly embodied as being performed and completed by a hardware decoding processor, or performed and completed by a combination of hardware in the decoding processor and software modules. The software module may be located in a storage medium, and the storage medium is located in the second memory 1403. The second processor 1402 reads information in the second memory 1403, and completes operations of the foregoing methods in combination with hardware thereof.

In an exemplary embodiment, the platform 1400 may be implemented by one or more of an ASIC, a DSP, a PLD, a CPLD, an FPGA, a general-purpose processor, a controller, an MCU, a microprocessor or other electronic components, to perform the foregoing methods.

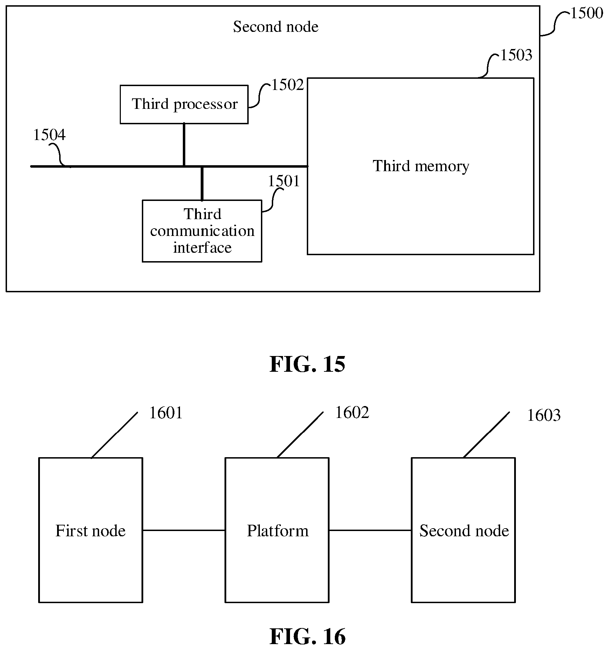

Based on hardware implementation of the above program modules, and in order to implement the method on the second node side according to the embodiment of the disclosure, an embodiment of the disclosure further provides a second node, and as shown in FIG. 15, the second node 1500 includes a third communication interface 1501, a third processor 1502 and a third memory 1503.

The third communication interface 1501 is capable of performing information interaction with other nodes and/or a first platform.

The third processor 1502 is connected to the third communication interface 1501 to implement information interaction with other nodes and/or the first platform, and is configured to perform methods provided by one or more technical solutions on the above second node side when the third processor 1502 executes a computer program.

The computer program is stored on the third memory 1503.

Specifically, the third communication interface 1501 is configured to receive first information sent by a first platform, here the first information is used for joint calculation by a first node and at least one second node 1500, or used for calculation by the at least one second node 1500, and the first information includes relevant information required by the calculation.

In an embodiment, in case that the first information includes algorithm information required by the calculation, the third communication interface 1501 is further configured to:
send a third request to the first platform based on the algorithm information required by the calculation, here the third request is configured to request acquisition of an algorithm package required by the calculation; and
receive the algorithm package sent by the first platform based on the third request.

In an embodiment, in case that the first information is used for joint calculation by the first node and at least one second node 1500, the third processor 1502 is configured to perform the joint calculation with the first node through the third communication interface 1501 by using the first information and the received algorithm package, to enable the first node to obtain a first calculation result.

In an embodiment, in case that the first information is used for calculation by the at least one second node 1500, the third processor 1502 is further configured to perform calculation by using the first information and the received algorithm package, to obtain a third calculation result.

In an embodiment, the third processor 1502 is further configured to send the third calculation result to the first platform through the third communication interface 1501, to enable the first platform to send a second calculation result to the first node, here the second calculation result is determined by the first platform using the first information and at least one third calculation result, and each of the at least one third calculation result is calculated by a respective one of the at least one second node 1500 using the first information.

In an embodiment, the third processor 1502 is further configured to:
acquire sixth information through the third communication interface 1501, here the sixth information includes names of fields included in data entered into the second node 1500;
correct the names of the fields included in the data entered into the second node 1500 by using a second database, to obtain corrected sixth information, here the second database includes multiple preset field names; and
store, based on the corrected sixth information, the data entered into the second node 1500.

In an embodiment, the third processor 1502 is further configured to:
send fourth information to the first node through the third communication interface 1501, here the fourth information includes names of fields included in data stored in the second node 1500;
receive, through the third communication interface 1501, third information sent by the first node, here the third information includes names of fields included in data stored in the first node, and the third information is sent by the first node in case that the names of the fields included in the data stored in the second node 1500 are inconsistent with the names of the fields included in the data stored in the first node; and
update the names of the fields included in the stored data by using the third information.

In an embodiment, the third processor 1502 is further configured to:
receive, through the third communication interface 1501, a second request sent by the first node, here the second request is configured to request acquisition of the fourth information of the second node 1500; and
send the fourth information to the first node through the third communication interface 1501 based on the second request.

In an embodiment, the third communication interface 1501 is further configured to send fourth information to the first platform, to enable the first platform to verify availability of the data stored in the second node 1500 by using the fourth information and a preset first strategy, here the first information is sent by the first platform after the availability of the data stored in the second node 1500 is verified.

In an embodiment, the third processor 1502 is further configured to:
authenticate the first node by using a preset second strategy; and
in case that authentication passes, perform the joint calculation with the first node through the third communication interface 1501 by using the first information, to enable the first node to obtain a first calculation result, or performing the calculation by using the first information, to obtain a third calculation result.

In an embodiment, the third processor 1502 is further configured to access to the first platform through the third communication interface 1501.

It should be noted that specific processing processes of the third communication interface 1501 and the third processor 1502 may be understood with reference to the above methods and are not elaborated here.

Of course, in an actual application, various components in the second node 1500 are coupled together through a bus system 1504. It may be understood that the bus system 1504 is configured to implement connection and communication among these components. The bus system 1504 includes a power bus, a control bus and a status signal bus, in addition to a data bus. However, for the sake of clarity, various buses are labeled as the bus system 1504 in FIG. 15.

The third memory 1503 in the embodiment of the disclosure is configured to store various types of data to support operations of the second node 1500. Examples of such data include any computer program configured to operate on the second node 1500.

The methods disclosed in the above embodiments of the disclosure may be applied to the third processor 1502 or implemented by the third processor 1502. The third processor 1502 may be an integrated circuit chip with signal processing capability. During implementation, each operation of the above methods may be completed by an integrated logic circuit in form of hardware in the third processor 1502 or instructions in form of software. The above third processor 1502 may be a general-purpose processor, a DSP or other programmable logic devices, a discrete gate or a transistor logic device, a discrete hardware component, etc. The third processor 1502 may implement or perform various methods, operations and logic block diagrams disclosed in the embodiments of the disclosure. The general-purpose processor may be a microprocessor or any conventional processor, etc. Operations of the methods disclosed in combination with the embodiments of the disclosure may be directly embodied as being performed and completed by a hardware decoding processor, or performed and completed by a combination of hardware in the decoding processor and software modules. The software module may be located in a storage medium, and the storage medium is located in the third memory 1503. The third processor 1502 reads information in the third memory 1503, and completes operations of the foregoing methods in combination with hardware thereof.

In an exemplary embodiment, the second node 1500 may be implemented by one or more of an ASIC, a DSP, a PLD, a CPLD, an FPGA, a general-purpose processor, a controller, an MCU, a microprocessor or other electronic components, to perform the foregoing methods.

It may be understood that the memory (the first memory 1303, the second memory 1403, and the third memory 1503) in the embodiment of the disclosure may be a volatile memory or a non-volatile memory, or may include both volatile and non-volatile memories. The non-volatile memory may be a Read Only Memory (ROM), a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a flash memory, a magnetic surface memory, an optical disk, or a Compact Disc Read-Only Memory (CD-ROM); the magnetic surface memory may be a magnetic disk memory or a magnetic tape memory. The volatile memory may be a Random Access Memory (RAM) used as an external cache. By way of exemplary descriptions rather than limitation, many forms of RAMs are available, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM), a Direct Rambus Random Access Memory (DRRAM). The memory described in the embodiment of the disclosure is intended to include, but is not limited to these memories and any other suitable types of memories.

In order to implement the methods provided in the embodiments of the disclosure, an embodiment of the disclosure further provides a system for communication. As shown in FIG. 16, the system includes a first node 1601, a platform 1602 and at least one second node 1603.

Here, it should be noted that specific processing processes of the first node 1601, the platform 1602 and the second node 1603 have been described above in detail and are not elaborated here.

In an exemplary embodiment, an embodiment of the disclosure further provides a storage medium, i.e., a computer storage medium, specifically a computer-readable storage medium. For example, the storage medium includes the first memory 1303 storing a computer program, and the above computer program may be executed by the first processor 1302 of the first node 1300 to complete operations of the foregoing method on first node side. For another example, the storage medium includes the second memory 1403 storing a computer program, and the above computer program may be executed by the second processor 1402 of the platform 1400 to complete operations of the foregoing method on first platform side. For another example, the storage medium includes the third memory 1503 storing a computer program, and the above computer program may be executed by the third processor 1502 of the second node 1500 to complete operations of the foregoing method on second node side. The computer-readable storage medium may be an FRAM, a ROM, a PROM, an EPROM, an EEPROM, a flash memory, a magnetic surface memory, an optical disk, or a CD-ROM, etc.

It should be noted that "first", "second" or the like are intended to distinguish similar objects, and are not necessarily intended to describe a specific order or sequence.

Furthermore, the technical solutions described in the embodiments of the disclosure may be arbitrarily combined there-between without conflict.

The above descriptions are only preferred embodiments of the disclosure and are not intended to limit the scope of protection of the disclosure.

## Claims

1. A method for communication, applied to a first node, the method comprising:
sending first information to a first platform, wherein the first information is used for joint calculation by the first node and at least one second node, or used for calculation by the at least one second node, and the first information comprises relevant information required by the calculation.

2. The method of claim 1, wherein in case that the first information is used for joint calculation by the first node and at least one second node, and the first information comprises algorithm information required by the calculation, the method further comprises:
sending a first request to the first platform based on the algorithm information required by the calculation, wherein the first request is configured to request acquisition of an algorithm package required by the calculation; and
receiving the algorithm package sent by the first platform based on the first request.

3. The method of claim 2, further comprising:
performing the joint calculation with the at least one second node by using the first information and the received algorithm package, to obtain a first calculation result.

4. The method of claim 1, further comprising in case that the first information is used for calculation by the at least one second node:
receiving a second calculation result sent by the first platform, wherein the second calculation result is determined by the first platform using the first information and at least one third calculation result, and each of the at least one third calculation result is calculated by a respective one of the at least one second node using the first information.

5. The method of claim 1, further comprising before sending the first information to the first platform:
acquiring second information, wherein the second information comprises names of fields comprised in data entered into the first node;
correcting the names of the fields comprised in the data entered into the first node by using a first database, to obtain corrected second information, wherein the first database comprises a plurality of preset field names; and
storing, based on the corrected second information, the data entered into the first node.

6. The method of any one of claims 1 to 5, wherein the first information comprises at least one of:
algorithm information required by the calculation;
an identifier (ID) of the at least one second node; or
ID of the first node.

7. The method of any one of claims 1 to 5, further comprising before sending the first information to the first platform:
acquiring third information, wherein the third information comprises names of fields comprised in data stored in the first node;
acquiring fourth information of each of the at least one second node, wherein the fourth information comprises names of fields comprised in data stored in the second node;
with respect to each of the at least one second node, determining, based on the third information and the fourth information of the second node, whether the names of the fields comprised in the data stored in the second node are consistent with the names of the fields comprised in the data stored in the first node; and
sending the third information to the second node in case that the names of the fields comprised in the data stored in the second node are inconsistent with the names of the fields comprised in the data stored in the first node, to enable the second node to update the names of the fields comprised in the stored data by using the third information.

8. The method of claim 7, wherein acquiring fourth information of each of the at least one second node comprises:
sending a second request to each of the at least one second node, wherein the second request is configured to request acquisition of the fourth information of the second node; and
receiving the fourth information sent by each of the at least one second node based on the second request.

9. The method of any one of claims 1 to 5, further comprising in case that the first information is used for joint calculation by the first node and at least one second node:
performing the joint calculation with the at least one second node upon receiving fifth information sent by the first platform, to obtain a first calculation result, wherein the fifth information indicates that availability of data stored in the at least one second node is verified.

10. The method of any one of claims 1 to 5, further comprising:
accessing to the first platform.

11. A method for communication, applied to a first platform, the method comprising:
receiving first information sent by a first node, wherein the first information is used for joint calculation by the first node and at least one second node, or used for calculation by the at least one second node, and the first information comprises relevant information required by the calculation; and
sending the first information to each of the at least one second node.

12. The method of claim 11, further comprising in case that the first information is used for joint calculation by the first node and at least one second node, and the first information comprises algorithm information required by the calculation:
receiving a first request sent by the first node based on the algorithm information required by the calculation, wherein the first request is configured to request acquisition of an algorithm package required by the calculation; and
sending the algorithm package required by the calculation to the first node based on the first request.

13. The method of claim 11, further comprising in case that the first information comprises algorithm information required by the calculation:
receiving a third request sent by each of the at least one second node based on the algorithm information required by the calculation, wherein the third request is configured to request acquisition of an algorithm package required by the calculation; and
sending the algorithm package required by the calculation to each of the at least one second node based on the third request.

14. The method of claim 11, further comprising in case that the first information is used for calculation by the at least one second node:
receiving a third calculation result sent by each of the at least one second node, to obtain at least one third calculation result, wherein each of the at least one third calculation result is calculated by a respective one of the at least one second node using the first information;
determining a second calculation result by using the first information and the at least one third calculation result; and
sending the second calculation result to the first node.

15. The method of any one of claims 11 to 14, wherein the first information comprises at least one of:
algorithm information required by the calculation;
an identifier (ID) of the at least one second node; or
ID of the first node.

16. The method of any one of claims 11 to 14, further comprising:
acquiring fourth information of each of the at least one second node, wherein the fourth information comprises names of fields comprised in data stored in the second node;
verifying availability of the data stored in each of the at least one second node by using the fourth information and a preset first strategy; and
sending the first information to each of the at least one second node, after the availability of the data is verified.

17. The method of claim 16, further comprising:
sending fifth information to the first node, wherein the fifth information indicates that the availability of the data stored in the at least one second node is verified.

18. The method of any one of claims 11 to 14, further comprising:
accessing to the first node and the second node.

19. A method for communication, applied to a second node, the method comprising:
receiving first information sent by a first platform, wherein the first information is used for joint calculation by a first node and at least one second node, or used for calculation by the at least one second node, and the first information comprises relevant information required by the calculation.

20. The method of claim 19, further comprising in case that the first information comprises algorithm information required by the calculation:
sending a third request to the first platform based on the algorithm information required by the calculation, wherein the third request is configured to request acquisition of an algorithm package required by the calculation; and
receiving the algorithm package sent by the first platform based on the third request.

21. The method of claim 20, further comprising in case that the first information is used for joint calculation by the first node and at least one second node:
performing the joint calculation with the first node by using the first information and the received algorithm package, to enable the first node to obtain a first calculation result.

22. The method of claim 20, further comprising in case that the first information is used for calculation by the at least one second node:
performing calculation by using the first information and the received algorithm package, to obtain a third calculation result.

23. The method of claim 22, further comprising:
sending the third calculation result to the first platform, to enable the first platform to send a second calculation result to the first node, wherein the second calculation result is determined by the first platform using the first information and at least one third calculation result, and each of the at least one third calculation result is calculated by a respective one of the at least one second node using the first information.

24. The method of claim 19, further comprising before receiving the first information sent by the first platform:
acquiring sixth information, wherein the sixth information comprises names of fields comprised in data entered into the second node;
correcting the names of the fields comprised in the data entered into the second node by using a second database, to obtain corrected sixth information, wherein the second database comprises a plurality of preset field names; and
storing, based on the corrected sixth information, the data entered into the second node.

25. The method of any one of claims 19 to 24, wherein the first information comprises at least one of:
algorithm information required by the calculation;
an identifier (ID) of the at least one second node; or
ID of the first node.

26. The method of any one of claims 19 to 24, further comprising before receiving the first information sent by the first platform:
sending fourth information to the first node, wherein the fourth information comprises names of fields comprised in data stored in the second node;
receiving third information sent by the first node, wherein the third information comprises names of fields comprised in data stored in the first node, and the third information is sent by the first node in case that the names of the fields comprised in the data stored in the second node are inconsistent with the names of the fields comprised in the data stored in the first node; and
updating the names of the fields comprised in the stored data by using the third information.

27. The method of claim 26, wherein sending the fourth information to the first node comprises:
receiving a second request sent by the first node, wherein the second request is configured to request acquisition of the fourth information of the second node; and
sending the fourth information to the first node based on the second request.

28. The method of any one of claims 19 to 24, further comprising before receiving the first information sent by the first platform:
sending fourth information to the first platform, to enable the first platform to verify availability of the data stored in the second node by using the fourth information and a preset first strategy, wherein the first information is sent by the first platform after the availability of the data stored in the second node is verified.

29. The method of any one of claims 19 to 24, further comprising:
authenticating the first node by using a preset second strategy; and
in case that authentication passes, performing the joint calculation with the first node by using the first information, to enable the first node to obtain a first calculation result, or performing the calculation by using the first information, to obtain a third calculation result.

30. The method of any one of claims 19 to 24, further comprising:
accessing to the first platform.

31. An apparatus for communication, arranged in a first node, the apparatus for communication comprising:
a first sending unit, configured to send first information to a first platform, wherein the first information is used for joint calculation by the first node and at least one second node, or used for calculation by the at least one second node, and the first information comprises relevant information required by the calculation.

32. An apparatus for communication, arranged in a first platform, the apparatus for communication comprising:
a first receiving unit, configured to receive first information sent by a first node, wherein the first information is used for joint calculation by the first node and at least one second node, or used for calculation by the at least one second node, and the first information comprises relevant information required by the calculation; and
a second sending unit, configured to send the first information to each of the at least one second node.

33. An apparatus for communication, arranged in a second node, the apparatus for communication comprising:
a second receiving unit, configured to receive first information sent by a first platform, wherein the first information is used for joint calculation by a first node and at least one second node, or used for calculation by the at least one second node, and the first information comprises relevant information required by the calculation.

34. A first node, comprising a first communication interface and a first processor,
wherein the first communication interface is configured to send first information to a first platform, the first information is used for joint calculation by the first node and at least one second node, or used for calculation by the at least one second node, and the first information comprises relevant information required by the calculation.

35. A platform, comprising a second communication interface and a second processor,
wherein the second communication interface is configured to:
receive first information sent by a first node, wherein the first information is used for joint calculation by the first node and at least one second node, or used for calculation by the at least one second node, and the first information comprises relevant information required by the calculation; and
send the first information to each of the at least one second node.

36. A second node, comprising a third communication interface and a third processor,
wherein the third communication interface is configured to receive first information sent by a first platform, the first information is used for joint calculation by a first node and at least one second node, or used for calculation by the at least one second node, and the first information comprises relevant information required by the calculation.

37. A first node, comprising a first processor, and a first memory configured to store a computer program executable on the processor,
wherein the first processor is configured to perform steps of the method of any one of claims 1 to 10 when the first processor executes the computer program.

38. A platform, comprising a second processor, and a second memory configured to store a computer program executable on the processor,
wherein the second processor is configured to perform steps of the method of any one of claims 11 to 18 when the second processor executes the computer program.

39. A second node, comprising a third processor, and a third memory configured to store a computer program executable on the processor,
wherein the third processor is configured to perform steps of the method of any one of claims 19 to 30 when the third processor executes the computer program.

40. A storage medium, having stored thereon a computer program, wherein when the computer program is executed by a processor, steps of the method of any one of claims 1 to 10 are implemented, or steps of the method of any one of claims 11 to 18 are implemented, or steps of the method of any one of claims 19 to 30 are implemented.
